# EUROPÄISCHE PATENTSCHRIFT

(11) **EP 1 146 235 B1**
(45) Veröffentlichungstag und Bekanntmachung des Hinweises auf die Patenterteilung: **11.05.2005**
(21) Anmeldenummer: 01108100.7
(22) Anmeldetag: 30.03.2001
(51) Int. Cl.: F16B 5/12, F16B 37/04, B60R 13/04

(54) **Vorrichtung zur verdeckten Befestigung eines Profilteiles**
Device for the concealed fastening of a profiled element
Dispositif pour la fixation invisible d'un profil

(30) Priorität: 13.04.2000 DE 20006801 U
(43) Veröffentlichungstag der Anmeldung: 17.10.2001
(73) Patentinhaber: Erbslöh Aktiengesellschaft, 42554 Velbert (DE)
(72) Erfinder: Blomberg, Harald, 42349 Wuppertal (DE)
(74) Vertreter: Mann, Volker, Dr.

(56) Entgegenhaltungen:
- DE-A- 2 049 241
- DE-A- 3 001 942
- DE-A- 3 223 554

## Beschreibung

Die Erfindung betrifft eine Vorrichtung zur verdeckten Befestigung eines Profilteiles, insbesondere einer Zier- oder Schutzleiste an ein oder mehreren Trägerteilen, insbesondere an Karosserieteilen, mit den Merkmalen im Oberbegriff des Hauptanspruches.

Eine solche Vorrichtung ist aus der DE-C-32 23 554 zur verdeckten Befestigung von Zier- oder Schutzleisten an Fahrzeugen bekannt. Für die Befestigung sind ein oder mehrere Befestigungselemente vorgesehen, die ein Kulissenteil und ein als Gewindezapfen ausgebildetes Verankerungsteil besitzen und die sich in einer Montage gerechten Lage entsprechend den vorgesehenen Befestigungsstellen am Fahrzeug an der Zierleiste positionieren lassen. Die Zierleiste hat einen im wesentlichen C-förmigen Befestigungskanal mit vorspringenden Seitenstegen. Im Befestigungskanal ist das Kulissenteil aufgenommen und geführt. Die Seitenstege und das Kulissenteil haben formschlüssig ineinander greifende Rastelemente, mit denen die Position in Axialrichtung des Befestigungskanals festgelegt werden kann. Die Rastelemente bestehen aus Ausnehmungen in den Seitenrändern der Seitenstege und aus schräg abgewinkelten Armen am Kulissenteil. Das Kulissenteil besteht aus einer einfachen Platte, die die Seitenstege hintergreift und sich an diesen zur Übertragung der Spannkräfte abstützt. Eine Abstützung kann dabei nur in den Eckbereichen, aber nicht an den abgewinkelten Armen erfolgen. Die zur Verfügung stehende Stütz- und Spannflächen sind dadurch relativ klein und außerdem vom Verankerungsteil distanziert. Im Bereich der abgewinkelten Arme kann keine Abstützung erfolgen. Außerdem besitzt das Kulissenteil an den Rändern der abgewinkelten Arme Freischnitte oder Ausstanzungen, die zu Kerbproblemen führen können. Das bekannte Befestigungselement kann sich aufgrund dieser Formgebung bei größeren Spannkräften elastisch und u.U. auch plastisch verformen.

Eine ähnliche Befestigungsvorrichtung ist aus der DE-A-30 01 942 bekannt. Die dabei auftretenden Probleme sind ebenfalls vergleichbar.

Die DE 20 49 241 A zeigt eine weitere Befestigungsvorrichtung für Zierleisten. Sie besitzt einen Halteklips mit einem hochstehenden und durch die Schlitzöffnung einer Schiene ragenden zapfenförmigen Klipskopf, der an der Unterseite als Rückhalt eine die Seitenstege hintergreifende breite und ebene Kopfplatte aufweist. Auf den Klipskopf kann von außen ein gebogener Haltefederstreifen gesteckt werden, der durch den Schienenschlitz greift und für eine federnde Anpressung der Kopfplatte an den Schenkelenden der geschlitzten Schiene sorgt. Der Haltefederstreifen wird erst nach erfolgter Positionierung des Halteklipses an der Befestigungsstelle in der Schiene über den Klipskopf gestülpt und hat keine Führungsaufgabe. Vielmehr werden die Halteklipse in der Schiene mit einer Schablone auf den gewünschten Abstand voneinander verschoben. Die schmalen Seiten der Kopfplatte können kürzer als der freie Raum in der C-förmigen Halteschiene sein, so dass jeder Halteklips sich außer in Längsrichtung auch etwas in Querrichtung verschieben kann. Somit ist der Halteklips in der Schiene weitgehend führungslos und wird nur durch die Kopfplatte gegen Herausfallen gesichert.

Es ist Aufgabe der vorliegenden Erfindung, eine bessere Befestigungsvorrichtung aufzuzeigen.

Die Erfindung löst diese Aufgabe mit den Merkmalen im Hauptanspruch.
Die erfindungsgemäße Ausbildung des Befestigungselementes hat den Vorteil, dass über den breiten Spannkopf des Kulissenteiles die Spann- und Befestigungskräfte optimal und auf einer größeren Fläche als beim Stand der Technik an den Seitenstegen abgestützt werden können. Hierbei kann insbesondere auch im Bereich der Rastelemente eine Abstützung erfolgen. Unerwünschte Verformungen werden vermieden

Für die exakte axiale Positionierung im Befestigungskanal ist das schmälere Führungsteil mit ein oder mehreren seitlichen Rastelementen vorgesehen. Das Führungsteil und die Rastelemente sind dadurch von den Stütz- und Spannkräften entlastet. Außerdem kann das Führungsteil im Kanalschlitz zwischen den Seitenstegen seitlich geführt sein. Die seitliche Führung des Kulissenteiles kann aber auch alternativ oder zusätzlich über die seitlichen Flanken des Spannkopfes am Befestigungskanal erfolgen.

Durch die abgestufte Ausbildung lässt sich das Kulissenteil optimal im Befestigungskanal führen und positionieren. Hierbei ist es günstig, wenn die Weite des Kanalschlitzes und die Breite des Führungsteiles aufeinander abgestimmt sind. Die Rastelemente können dabei in beliebig geeigneter Weise ausgebildet und angeordnet sein. Über geeignete Federelemente kann auch eine federnde Sicherung des Befestigungselementes im Befestigungskanal und an der Rastposition erfolgen.

Das erfindungsgemäße Befestigungselement lässt sich ein- oder mehrteilig ausbilden. Die mehrteilige Ausführung hat hierbei den Vorteil, dass die Funktionsteile aus unterschiedlichen Werkstoffen bestehen können. Hierdurch lässt sich unterschiedlichen Einsatzbedingungen und auch Belastungen des Befestigungselementes Rechnung tragen. Wenn mit der Befestigungsvorrichtung und dem Befestigungselement nicht nur eine verdeckte Befestigung der Zierleiste an den Trägerteilen erfolgen soll, sondern darüber hinaus mehrere Trägerteile miteinander jeweils gleich mit dem Befestigungselement verbunden werden sollen, empfiehlt sich die Ausbildung des einen Einzelteils des Befestigungselementes aus Metall. Dieses speziell für die Kraftübertragung vorgesehene und geeignete Einzelteil besteht dann aus dem Spannkopf und dem Verankerungsteil, das für höhere Spannkräfte und für die Verbindung mehrerer Trägerteile vorzugsweise als Gewindebolzen ausgebildet ist. Dem anderen Einzelteil können dann die Führungsaufgaben zugewiesen werden, wobei die Belastung dieses Einzelteiles geringer ist und den Einsatz weniger belastbarer Werkstoffe, z. B. Kunststoff, ermöglicht. In den Unteransprüchen sind hierfür besonders vorteilhafte Ausgestaltungen angegeben.

Die Erfindung ist in den Zeichnungen beispielsweise und schematisch dargestellt. Im einzelnen zeigen:
- Figur 1:: in einem Querschnitt eine Vorrichtung zur verdeckten Befestigung einer Zierleiste an zwei Karosserieteilen mittels eines Befestigungselementes,
- Figur 2:: eine vergrößerte Darstellung der Befestigungsstelle von Figur 1,
- Figur 3:: eine perspektivische Ansicht eines einteiligen Befestigungselementes von unten,
- Figur 4 und 5:: perspektivische Ansichten eines zweiteiligen Befestigungselementes von oben und unten,
- Figur 6 und 7:: perspektivische Ansichten der beiden Einzelteile des Befestigungselementes von Figur 4 und 5,
- Figur 8:: eine abgebrochene perspektivische Ansicht des Befestigungskanals am Profilteil und
- Figur 9:: eine Draufsicht auf die Befestigungsstelle mit einem im Befestigungskanal eingesetzten Befestigungselement.

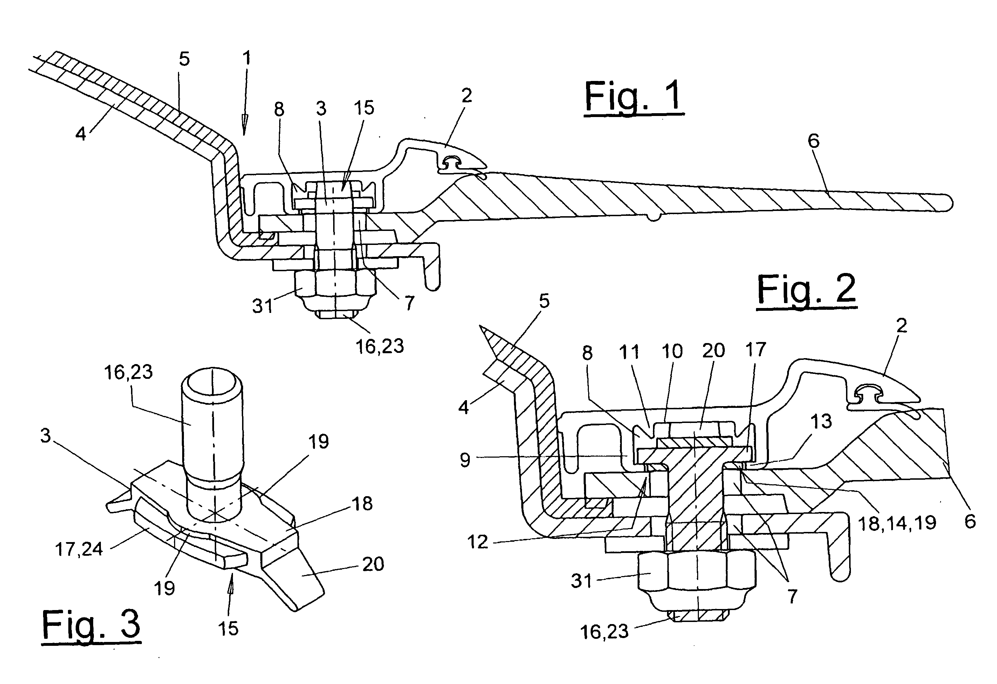

Figur 1 und 2 zeigen eine Befestigungsvorrichtung (1) zur verdeckten Befestigung eines Profilteiles (2) an zwei Trägerteilen (4,6). Das Profilteil (2) ist in der dargestellten Ausführungsform als Zier- oder Schutzleiste ausgebildet, die z.B. aus einem stranggepressten und oberflächenbehandelten Leichtmetallprofil besteht. Die beiden Trägerteile (4,6) sind Karosserieteile eines Kraftfahrzeuges. In der dargestellten Ausführungsform handelt es sich speziell um die Befestigung einer Zierleiste (2) im Verdeckbereich an einem Cabrio. Durch die Befestigungsvorrichtung (1) werden hierbei zugleich auch die beiden Trägerteile (4,6) miteinander verbunden. Das Trägerteil (4) ist dabei ein mit einer Beschichtung (5) aus Vinyl oder dgl. versehenes Karosserieteil aus Blech, das mit dem als Verdeckkastendeckel ausgebildeten anderen metallischen Trägerteil (6) verbunden wird. Die Verbindungsstelle wird über die Zierleiste (2) abgedeckt.

Alternativ kann das Profilteil (2) auch aus einer Schutzleiste oder einem anderen beliebig geeigneten leistenförmigen oder profilartigen Teil bestehen. Mit der Befestigungsvorrichtung (1) kann auch eine einfachere Befestigung an nur einem Trägerteil erfolgen. Hierbei können z.B. Zier- oder Schutzleisten an den Seitenwänden und Türen von Fahrzeugen befestigt werden. Darüber hinaus sind auch andere Einsatzbereiche außerhalb der Fahrzeugtechnik in beliebigen anderen technischen Fachbereichehmöglich.

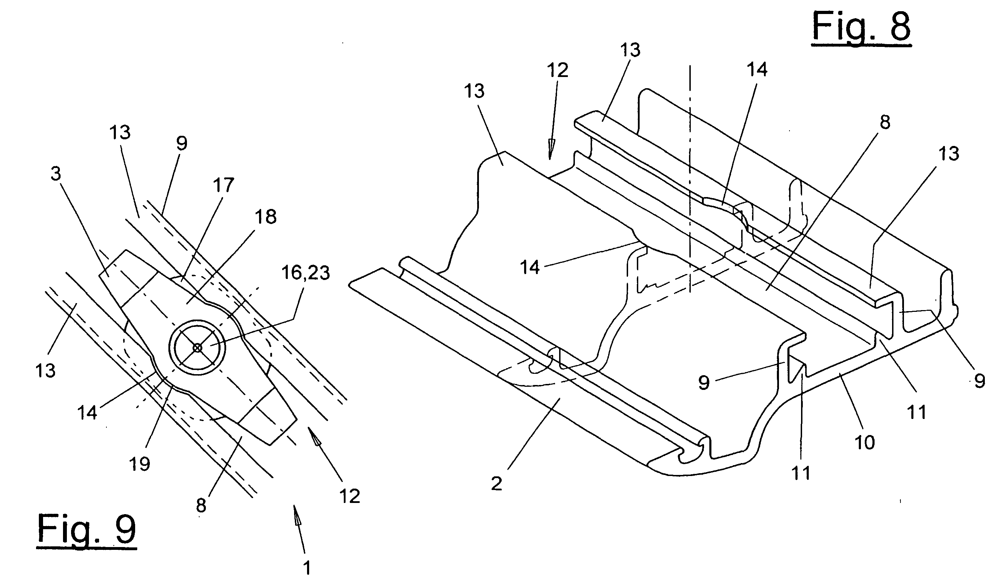

Das Profilteil (2) besitzt mindestens einen Befestigungskanal (8), in dem mindestens ein Befestigungselement (3) axial verschieblich geführt ist und an vorgegebenen Befestigungsstellen positioniert werden kann. Im gezeigten Ausführungsbeispiel haben die Trägerteile (4,6) ein oder mehrere korrespondierende Aufnahmeöffnungen (7), an denen die Befestigung erfolgen soll. Im Befestigungskanal (8) werden dazu entsprechend viele Befestigungselemente (3) an entsprechenden Stellen positioniert. Hierfür sind am Befestigungskanal (8) Rastelemente (14) an Stellen vorgesehen, die mit den Aufnahmeöffnungen (7) korrespondieren. Die Befestigungselemente (3) haben ebenfalls Rastelemente (19), die mit denjenigen am Befestigungskanal (8) formschlüssig ineinander greifen. Figur 9 zeigt eine solche Befestigungsstelle mit Eingriff der Rastelemente (14,19).

Das Profilteil (2) ist mit seinem Befestigungskanal (8) in Figur 8 näher dargestellt. Der Befestigungskanal (8) befindet sich an der Unterseite des Profilteiles (2) und hat einen im wesentlichen C-förmigen Querschnitt. Er besitzt einen Kanalboden (10) und hiervon abstehende Seitenwände (9), die an den freien Enden abgewinkelte Seitenstege (13) aufweisen, welche zwischen sich einen verengten Kanalschlitz (12) freilassen. Die Rastelemente (14) sind vorzugsweise an den Seitenstegen (13) angeordnet und bestehen in der gezeigten Ausführungsform aus bogenförmigen Ausnehmungen. Sie können auch eine beliebige andere Formgebung haben. Hierbei können ein oder beide Seitenstege (13) ein Rastelement (14) aufweisen. Am Kanalboden (10) können ferner an den Randbereichen (2) längs laufende parallele Führungsleisten (11) vorhanden sein.

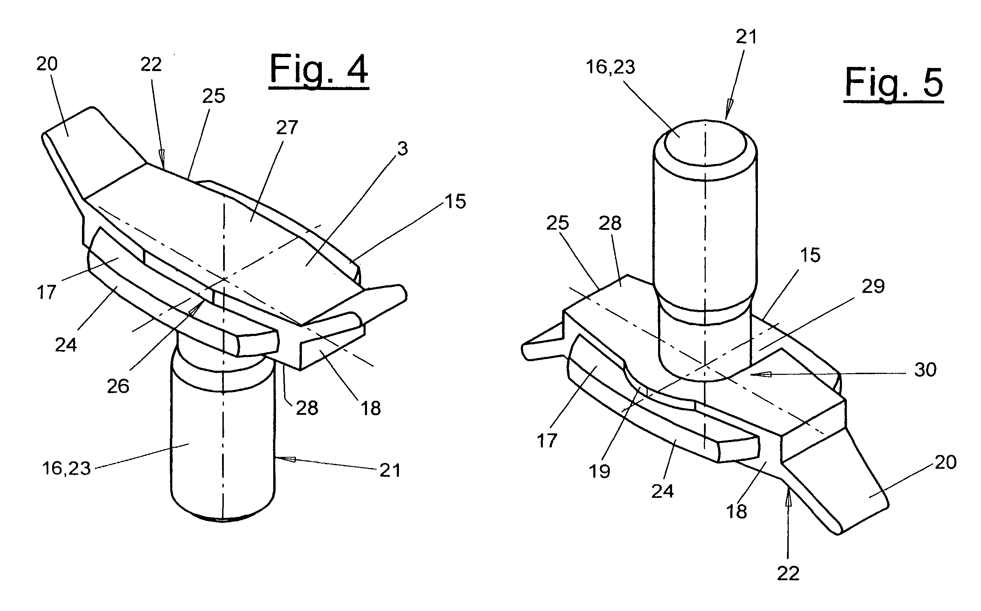

Das Befestigungselement (3) ist in Figur 3 bis 7 näher dargestellt. Figur 3 zeigt hierbei eine einteilige Ausführungsform. In der Variante von Figur 4 bis 7 besteht das Befestigungselement (3) aus zwei Einzelteilen (21,22).

Das Befestigungselement (3) hat in allen Ausführungsvarianten ein Kulissenteil (15), das in den Befestigungskanal (8) eingebracht wird und ein Verankerungsteil (16), das durch den Kanalschlitz (12) nach außen ragt. Das Verankerungsteil (16) kann in unterschiedlicher Weise je nach Wahl der Befestigungstechnik ausgebildet sein. In der gezeigten Ausführungsform besitzt es einen Gewindebolzen (23) mit einem endseitigen Außengewinde zur Aufnahme einer Mutter (31). Alternativ kann das Verankerungsteil (16) aus einem Clipsdorn, einer Clipsharpune oder in sonstiger beliebiger Weise ausgebildet sein. Dementsprechend kann die Befestigung über eine Schraubverbindung, eine Clips- oder Schnappverbindung oder auf beliebige andere geeignete Weise erfolgen.

Das Kulissenteil (15) besteht aus einem breiten Spannkopf (17) und einem demgegenüber an den Längsseiten schmäleren Führungsteil (18), das unter dem Spannkopf (17) angeordnet ist. Der Spannkopf hat eine der Innenweite des Befestigungskanals (8) angepasste Breite und ist mit seinen Flanken (24) an den Seitenwänden (9) geführt. Der Spannkopf (17) übergreift dabei die Seitenstege (13) und stützt sich auf diesen zur Übertragung der Spann- und Stützkräfte ab. Der Spannkopf (17) ist dabei vorzugsweise so breit, dass er auch die Ausnehmungen (14) an den Rändern der Seitenstege (13) übergreift. Figur 9 zeigt diese Ausbildung. Der Spannkopf (17) ist zur Kraftübertragung vorzugsweise direkt mit dem Verankerungsteil (16) verbunden.

Das Führungsteil (18) besitzt ein oder mehrere seitliche Rastelemente (19), die mit den Randelementen (14) der Seitenstege (13) korrespondieren und für eine formschlüssige Verbindung in Axialrichtung des Befestigungskanales (8) sorgen. Figur 9 zeigt diese Ausbildung. In Figur 3 und 9 hat das Führungsteil (18) zwei seitliche und zentrisch zum Verankerungsteil (16) einander gegenüber liegende Rastelemente (19) in Form von runden Ausbuchtungen. In der Variante der Figuren 4 bis 7 hat das Führungsteil (18) nur eine seitliche Ausbuchtung (19). Dementsprechend können auch am Befestigungskanal (8) nur an einem Seitensteg (13) Ausnehmungen (14) vorhanden sein.

Durch die stufige Ausbildung des Kulissenteiles (15) liegt der Spannkopf (17) in der Befestigungsstellung auf der Oberseite der Seitenstege (13) auf. Das Führungsteil (18) greift in den Kanalschlitz (12) und befindet sich zwischen den Seitenstegen (13). Die Schlitzweite und die Breite des Führungsteils (18) sind hierfür entsprechend aufeinander abgestimmt. In der gezeigten Ausführungsform hat das Führungsteil (8) an beiden Enden in der Draufsicht eine konisch nach außen sich verjüngende Form. Alternativ kann es auch eine andere Form, z.B. eine im wesentlichen rechteckige oder quaderförmige Formgebung haben.

Das Kulissenteil (15) kann ein oder mehrere Federelemente (20) besitzen, die sich am Befestigungskanal (8) und vorzugsweise am Kanalboden (10) abstützen. In der gezeigten Ausführungsform sind zwei an den Enden des Kulissenteiles (15) schräg abstehende Federzungen vorhanden.

Das einteilige Befestigungselement (3) kann aus einem beliebig geeigneten Material hergestellt sein. Vorzugsweise besteht es aus Kunststoff.

Das in Figur 4 bis 7 näher dargestellte zweiteilige Befestigungselement (3) kann aus einer Werkstoffkombination bestehen. Das eine Einzelteil (21), das im wesentlichen aus dem Spannkopf (17) und dem damit direkt verbundenen Verankerungsteil (16) besteht, ist vorzugsweise aus Metall gefertigt, kann aber auch aus Kunststoff oder aus beliebigen anderen Materialien bestehen. Das zweite Einzelteil (22), das für die Führung zuständig ist und welches geringeren Belastungen unterliegt, besteht aus einem beliebig geeigneten anderen Material, z.B. Kunststoff. Die beiden Einzelteile (21,22) können auf beliebig geeignete Weise miteinander verbunden werden, vorzugsweise über eine in den Zeichnungen näher dargestellte Schnappverbindung (30). Die Verbindung kann starr oder lösbar sein.

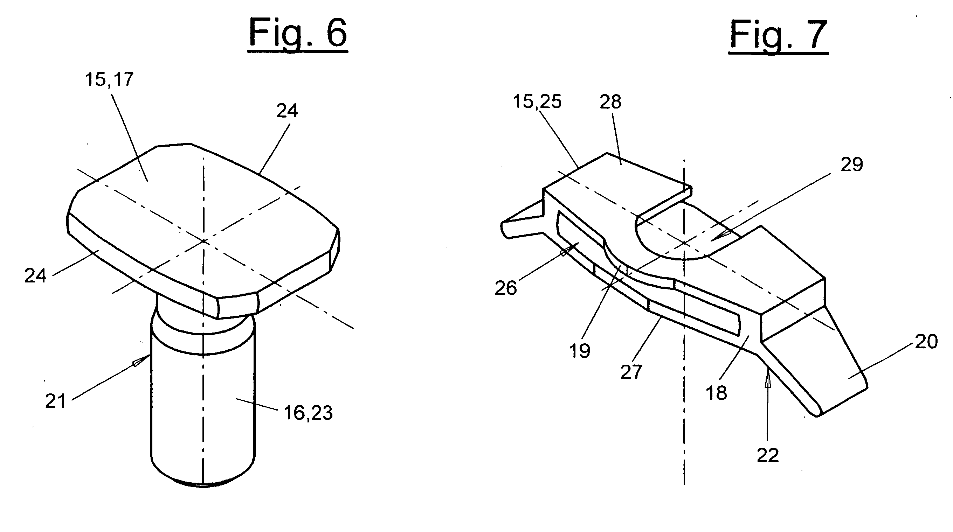

Das Einzelteil (22) ist in Figur 7 in umgekehrter Stellung näher dargestellt. Es besteht aus einem im wesentlichen rahmen- oder kastenförmigen Gehäuse (25) mit einem innen liegenden schlitzförmigen Freiraum (26) zur Aufnahme des Spannkopfes (17). Am Dach (27) des Gehäuses (25) sind endseitig die Federzungen (20) angeordnet. Das Dach (27) hat im Mittelbereich parallele Seitenränder, die anschließend zu beiden Enden hin nach innen abgewinkelt sind und eine Konusform bilden. Die Breite des Daches (27) im Mittelbereich kann auf die Weite der Nut zwischen den Führungsleisten (11) am Kanalboden (10) abgestimmt sein, so dass diese eine Führung für das Dach (27) bilden können. Die Federelemente (20) können ebenfalls zwischen den Führungsleisten (11) geführt sein.

Der Boden (28) des Gehäuses (25) hat bei der zweiteiligen Ausführungsform im Mittelbereich auf der einen Seite die vorerwähnte Ausbuchtung (19) und auf der gegenüber liegenden Seite einen quer verlaufenden Einführschlitz (29) zur Aufnahme des Verankerungsteils (16) und insbesondere des Gewindebolzens (23). Im Schlitzbereich können kleine Federnasen oder dergleichen für die vorerwähnte Schnapp- oder Clipsverbindung (30) zwischen dem Boden (28) und dem Gewindebolzen (23) sorgen. Zur Verbindung wird das Einzelteil (21) mit dem Spannkopf (17) in dem beidseitig offenen Freiraum (26) eingeführt, wobei der Einführschlitz (29) den Gewindebolzen (23) aufnimmt und einschnappt. In der in Figur 4 und 5 gezeigten Montagestellung steht der Spannkopf (17) beidseitig über das Gehäuse (25) vor.

Die vorerwähnte Ausbildung des Gehäuses (25) mit seinem Dach (27) und seinem Boden (28) kann im wesentlichen auch beim einteiligen Befestigungselement von Figur 3 verwirklicht sein. Anstelle des Einführschlitzes (29) ist hier eine zweite Ausbauchung (19) vorhanden. Der Spannkopf (17) und das Führungsteil (18) sind hierbei einstückig miteinander verbunden und z.B. als Kunststoffspritzteil ausgeführt.

Für die Montage wird das Befestigungselement (3) an den stirnseitigen Enden in dem Befestigungskanal (8) axial eingeführt. Die Einführung kann auch quer dazu an geeigneten erweiterten Öffnungsstellen des Kanalschlitzes (12) erfolgen. Im Befestigungskanal (8) wird das Befestigungselement (3) dann bis zur vorgesehenen Montagestelle verschoben, wo die Rastelemente (14,19) übereinander zu liegen kommen. Beim Verschieben wird das Befestigungselement (3) gegen die Wirkung der Federzungen (20) an den Kanalboden (10) gepresst, wobei das Gehäusedach (27) bzw. die Federzungen (20) zwischen den Führungsleisten (11) geführt werden können. Beim Verschieben liegt der Gehäuseboden (28) auf den Seitenstegen (13) auf und rutscht auf diesen bis zur Montagestelle entlang bis die Rastelemente (14,19) zur Deckung kommen und das Führungsteil (18) dann in den Kanalschlitz (12) abtauchen kann. Mit den vorpositionierten Befestigungselementen (3) kann das Profilteil (2) dann an dem oder den Trägerteil(en) (4,6) befestigt werden. Die Verankerungsteile (16) werden durch die Aufnahmeöffnungen (7) gesteckt und dort durch eine Clipsverbindung oder durch die in Figur 1 und 2 gezeigte Schraubverbindung mit der Mutter (31) von einer Unterlegscheibe fixiert. Bei der dargestellten Ausführungsform von Figur 1 und 2 werden hierbei die Trägerteile (4,6) gegeneinander verspannt, wobei das Profilteil (2) mit den Seitenstegen (13) auf das eine Trägerteil (6) drückt.

Abwandlungen der gezeigten Ausführungsform sind in verschiedener Weise möglich. Zum einen können die Befestigungselemente (3) und der Befestigungskanal (8) in beliebig geeigneter anderer Weise ausgestaltet sein.
Variabel sind hierbei auch die Rastelemente (14,19), die z. B. vertauscht sein können. Statt den ineinander greifenden Verdickungen und Ausnehmungen können die Rastelemente auch eine beliebige andere Gestaltung und Anordnung besitzen. Variabel ist ferner die Formgebung des Kulissenteils (15) und des Verankerungsteiles (16).

### BEZUGSZEICHENLISTE

- 1: Befestigungsvorrichtung
- 2: Profilteil, Zierleiste, Schutzleiste
- 3: Befestigungselement
- 4: Trägerteil, Karosserieteil
- 5: Beschichtung, Vinyl
- 6: Trägerteil, Verdeckkastendeckel
- 7: Aufnahmeöffnung
- 8: Befestigungskanal
- 9: Seitenwand
- 10: Kanalboden
- 11: Führungsleiste
- 12: Kanalschlitz
- 13: Seitensteg
- 14: Rastelement, Ausnehmung
- 15: Kulissenteil, Oberteil
- 16: Verankerungsteil, Unterteil
- 17: Spannkopf
- 18: Führungsteil
- 19: Rastelement, Ausbuchtung
- 20: Federelement, Federzunge
- 21: Einzelteil
- 22: Einzelteil
- 23: Gewindebolzen
- 24: Flanke
- 25: Gehäuse
- 26: Freiraum
- 27: Dach
- 28: Boden
- 29: Einführschlitz
- 30: Schnappverbindung
- 31: Mutter

## Patentansprüche

1. Vorrichtung zur verdeckten Befestigung eines Profilteils (2), insbesondere einer Zier- oder Schutzleiste, an ein oder mehreren Trägerteilen (4,6), insbesondere Karosserieteilen, bestehend aus einem oder mehreren montagegerecht positionierbaren Befestigungselementen (3), die ein Kulissenteil (15) und ein Verankerungsteil (16) besitzen, und einem Profilteil (2), das mindestens einen im wesentlichen C-förmigen Befestigungskanal (8) mit vorspringenden Seitenstegen (13) zur verschieblichen Aufnahme und Führung des Kulissenteils (15) aufweist, wobei die Seitenstege (13) und das Kulissenteil (15) formschlüssig ineinander greifende Rastelemente (14,19) haben, **dadurch gekennzeichnet, dass** das Kulissenteil (15) einen die Seitenstege (13) übergreifenden breiten Spannkopf (17) aufweist, unter dem ein schmäleres Führungsteil (18) mit mindestens einem seitlichen Rastelement (19) angeordnet ist.

2. Vorrichtung nach Anspruch 1, **dadurch**
**gekennzeichnet, dass** die Breite des Führungsteils (18) auf die Weite des Kanalschlitzes (12) zwischen den Seitenstegen (13) abgestimmt ist.

3. Vorrichtung nach Anspruch 1 oder 2, **dadurch**
**gekennzeichnet, dass** das Führungsteil (18) ein oder mehrere Rastelemente (19) in Form einer seitlich ausbauchenden Ausbuchtung aufweisen, wobei die Rastelemente (14) an den Seitenstegen (13) als zurückspringende Ausnehmungen ausgebildet sind.

4. Vorrichtung nach Anspruch 1, 2 oder 3, **dadurch**
**gekennzeichnet, dass** am Kulissenteil (15) ein oder mehrere abstehende und am Befestigungskanal (8) angreifende Federelemente (20) angeordnet sind.

5. Vorrichtung nach einem der Ansprüche 1 bis 4,
**dadurch gekennzeichnet, dass** das Befestigungselement (3) einteilig ausgebildet ist.

6. Vorrichtung nach einem der Ansprüche 1 bis 4,
**dadurch gekennzeichnet, dass** das Befestigungselement (3) mehrere Einzelteile (21,22) aufweist.

7. Vorrichtung nach Anspruch 6, **dadurch**
**gekennzeichnet, dass** die Einzelteile (21,22) aus unterschiedlichen Werkstoffen bestehen.

8. Vorrichtung nach Anspruch 6 oder 7, **dadurch**
**gekennzeichnet, dass** das eine Einzelteil (21) aus dem Spannkopf (17) und dem Verankerungsteil (16) besteht.

9. Vorrichtung nach einem der Ansprüche 6 bis 8,
**dadurch gekennzeichnet, dass** das eine Einzelteil (21) aus Metall besteht, wobei das Verankerungsteil (16) als Gewindebolzen (23) ausgebildet ist.

10. Vorrichtung nach einem der Ansprüche 6 bis 9,
**dadurch gekennzeichnet, dass** das andere Einzelteil (22) das Führungsteil (18) und das oder die Federelement(e) (20) aufweist.

11. Vorrichtung nach Anspruch 10,
**dadurch gekennzeichnet, dass** das andere Einzelteil (22) als rahmenartiges Gehäuse (25) mit einem inneliegenden Freiraum (26) zur Aufnahme des Spannkopfes (17) ausgebildet ist und einen seitlichen Einführschlitz (29) für das Verankerungsteil (16) aufweist.

12. Vorrichtung nach einem der Ansprüche 6 bis 11,
**dadurch gekennzeichnet, dass** die Einzelteile (21,22) durch eine Schnappverbindung (30) miteinander verbunden sind.

13. Vorrichtung nach einem der Ansprüche 1 bis 12,
**dadurch gekennzeichnet, dass** das oder die Rastelement(e) (14) am Befestigungskanal (8) montagegerecht mit Bezug auf Aufnahmeöffnungen (7) an dem oder den Trägerteil(en) (4,6) positioniert sind.

14. Vorrichtung nach einem der Ansprüche 1 bis 13,
**dadurch gekennzeichnet, dass** der Befestigungskanal (8) am Kanalboden (10) seitliche Führungsleisten (11) für das Kulissenteil (15) aufweist.

15. Vorrichtung nach einem der Ansprüche 1 bis 14,
**dadurch gekennzeichnet, dass** das Profilteil (2) sich mit den Seitenstegen (13) in Montagestellung spannend auf einem Trägerteil (4,6) abstützt.

## Claims

1. Device for the covered securing of a profile part (2), in particular of a decorative or protective strip, to one or more carrier parts (4, 6), in particular chassis parts, consisting of one or more securing elements (3) capable of being positioned in a manner suitable for fitting, which are provided with a link part (15) and an anchoring part (16), and a profile part (2), which exhibits at least one essentially C-shaped securing channel (8) with projecting side webs (13) for accommodating and guiding the link part (15) in a movable manner, wherein the side webs (13) and the link part (15) have engagement elements (14, 19) which engage into one another in positive fit, **characterised in that** the link part (15) exhibits a broad tensioning head (17) which engages over the side webs (13), beneath which is arranged a narrower guide part (18) with at least one lateral engagement element (19).

2. Device according to Claim 1, **characterised in that** the width of the guide part (18) is matched to the width of the channel slot (12) between the side webs (13).

3. Device according to Claims 1 or 2, **characterised in that** the guide part (18) exhibits one or more engagement elements (19) in the form of a convexity which bulges out laterally, wherein the engagement elements (14) are formed at the side webs (13) as recessed accommodation mountings.

4. Device according to Claims 1, 2 or 3, **characterised in that** one or more projecting spring elements (20) are arranged at the link part (15), said spring elements engaging at the securing channel (8).

5. Device according to one of Claims 1 to 4, **characterised in that** the securing element (3) is designed as one piece.

6. Device according to one of Claims 1 to 4, **characterised in that** the securing element (3) exhibits several individual parts (21, 22).

7. Device according to Claim 6, **characterised in that** the individual parts (21, 22) consist of different materials.

8. Device according to Claim 6 or 7, **characterised in that** the one individual part (21) consists of the tensioning head (17) and the anchoring part (16).

9. Device according to one of Claims 6 to 8, **characterised in that** the one individual part (21) consists of metal, whereby the anchoring part (16) is designed as a threaded bolt (23).

10. Device according to one of Claims 6 to 9, **characterised in that** the other individual part (22) exhibits the guide part ( 18) and the spring element(s) (20).

11. Device according to Claim 10, **characterised in that** the other individual part (22) is designed as a frame-type housing (25) with a free space (26) in its interior for accommodating the tensioning head (17), and exhibits a side introduction slot (29) for the anchoring part (16).

12. Device according to one of Claims 6 to 11, **characterised in that** the individual parts (21, 22) are connected to one another by a snap connection (30).

13. Device according to one of Claims 1 to 12, **characterised in that** the engagement element(s) (14) are positioned at the securing channel (8) in a correct position for mounting in relation to accommodation apertures (7) at the carrier part(s) (4, 6).

14. Device according to one of Claims 1 to 13, **characterised in that** the securing channel (8) exhibits at the channel base (10) lateral guide strips (11) for the link part (15).

15. Device according to one of Claims 1 to 14, **characterised in that** the profile part (2) is supported with the side webs (13) in the mounting position under tension on a carrier part (4, 6).

## Revendications

1. Dispositif pour la fixation invisible d'une pièce profilée (2), en particulier d'une baguette de décoration ou de protection, sur une ou plusieurs pièces de support (4, 6), en particulier des pièces de carrosserie, lequel dispositif est constitué d'un ou plusieurs éléments de fixation (3) qui sont positionnables selon le montage et qui possèdent une partie coulissante (15) et une partie d'ancrage (16), et d'une pièce profilée (2) qui comporte au moins un canal de fixation (8), sensiblement en forme de C, qui comporte des pattes latérales saillantes (13) et qui est destiné à loger et guider de façon déplaçable la partie coulissante (15), les pattes latérales (13) et la partie coulissante (15) comportant des éléments d'encliquetage (14, 19) s'engageant les uns dans les autres par correspondance de forme, **caractérisé en ce que** la partie coulissante (15) comporte une large tête de serrage (17) qui s'engage par-dessus les pattes latérales (13) et sous laquelle est placée une partie de guidage (18) plus petite comportant au moins un élément d'encliquetage latéral (19).

2. Dispositif selon la revendication 1, **caractérisé en ce que** la largeur de la partie de guidage (18) correspond à la largeur de la fente de canal (12) entre les pattes latérales (13).

3. Dispositif selon la revendication 1 ou 2, **caractérisé en ce que** la partie de guidage (18) comporte un ou plusieurs éléments d'encliquetage (19) se présentant sous la forme d'une incurvation latérale, les éléments d'encliquetage (14) au niveau des pattes latérales (13) étant conformés en évidements en retrait.

4. Dispositif selon la revendication 1, 2 ou 3, **caractérisé en ce qu'**un ou plusieurs éléments élastiques (20) disposés à distance et s'engageant dans le canal de fixation (8) sont disposés au niveau de la partie coulissante (15).

5. Dispositif selon l'une des revendications 1 à 4, **caractérisé en ce que** l'élément de fixation (3) est conformé d'une seule pièce.

6. Dispositif selon l'une des revendications 1 à 4, **caractérisé en ce que** l'élément de fixation (3) comporte plusieurs pièces individuelles (21, 22).

7. Dispositif selon la revendication 6, **caractérisé en ce que** les pièces individuelles (21, 22) sont en des matières différentes.

8. Dispositif selon la revendication 6 ou 7, **caractérisé en ce que** l'une des pièces individuelles (21) est constituée par la tête de serrage (17) et la partie d'ancrage (16).

9. Dispositif selon l'une des revendications 6 à 8, **caractérisé en ce que** l'une des pièces individuelles (21) est en métal, la partie d'ancrage (16) étant conformée en goujon fileté (23).

10. Dispositif selon l'une des revendications 6 à 9, **caractérisé en ce que** l'autre des pièces individuelles (22) comporte la partie de guidage (18) et l'élément élastique ou les éléments élastiques (20).

11. Dispositif selon la revendication 10, **caractérisé en ce que** l'autre des pièces individuelles (22) est conformée en boîtier de type bâti (25) comportant à l'intérieur un espace libre (26) destiné à recevoir la tête de serrage (17) et comporte une fente d'insertion latérale (29) destinée à la partie d'ancrage (16).

12. Dispositif selon l'une des revendications 6 à 11, **caractérisé en ce que** les pièces individuelles (21, 22) sont reliées entre elles par une liaison par encliquetage (30).

13. Dispositif selon l'une des revendications 1 à 12, **caractérisé en ce que** l'élément d'encliquetage ou les éléments d'encliquetage (14) sont positionnés selon le montage par rapport à des ouvertures de réception (7) sur la pièce de support ou les pièces de support (4, 6).

14. Dispositif selon l'une des revendications 1 à 13, **caractérisé en ce que** le canal de fixation (8) comporte au fond (10) des baguettes de guidage latérales (11) destinées à la partie coulissante (15).

15. Dispositif selon l'une des revendications 1 à 14, **caractérisé en ce que**, dans la position de montage, la pièce profilée (2) s'appuie avec serrage sur une pièce de support (4, 6) au moyen des pattes latérales (13).
